# EUROPÄISCHE PATENTSCHRIFT

(11) **EP 2 161 529 B1**
(45) Veröffentlichungstag und Bekanntmachung des Hinweises auf die Patenterteilung: **06.07.2016**
(21) Anmeldenummer: 09165748.6
(22) Anmeldetag: 17.07.2009
(51) Int. Cl.: F28F 9/00, B60K 11/04

(54) **Lagerelement zur elastischen Abstützung mindestens eines Wärmeübertragers in einem Kraftfahrzeug und Wärmeübertrager für ein Kraftfahrzeug**
Bearing element for elastic support of at least one heat exchanger in a motor vehicle and motor vehicle heat exchanger
Elément de support destiné au support élastique d'au moins un caloporteur dans un véhicule automobile et caloporteur pour un véhicule automobile

(30) Priorität: 04.09.2008 DE 102008045676
(43) Veröffentlichungstag der Anmeldung: 10.03.2010
(73) Patentinhaber: MAHLE Behr GmbH & Co. KG, 70469 Stuttgart (DE)
(72) Erfinder: Keerl, Björn, 74343 Sachsenheim (DE)
(74) Vertreter: Grauel, Andreas

(56) Entgegenhaltungen:
- DE-A1-102006 061 806
- JP-A- 2001 080 542
- US-A1- 2003 146 030

## Beschreibung

Die Erfindung betrifft ein Lagerelement zur elastischen Abstützung mindestens eines Wärmeübertragers in einem Kraftfahrzeug nach dem Oberbegriff des Patentanspruches 1 sowie einen Wärmeübertrager nach dem Oberbegriff des Patentanspruches 10. Ein Lagerelement nach dem Oberbegriff des Anspruchs 1 ist aus JP 2001080542 bekannt.

Wärmeübertrager für Kraftfahrzeuge, z. B. Kühlmitteikühler, Ladeluftkühler, Ölkühler oder Kältemittelkondensatoren werden bekanntlich elastisch gegenüber dem Rahmen oder der karoserie des Fahrzeuges abgestützt, wobei Gummielemente, z. B. in Form von Gummibuchsen, verwendet werden. Vielfach werden auch mehrere Wärmeüberträger zu einer Baugruppe, einem so genannten Kühlmodul, zusammengefasst, welches durch gemeinsame elastische Lager gegenüber dem Fahrzeug abgestützt wird. Die elastische Lagerung soll eine Schwingungsentkoppelung bewirken, d. h. die Übertragung von Schwingungen, die vom Fahrzeugrahmen oder vom Verbrennungsmotor ausgehen, verhindern oder zumindest reduzieren.

Durch die DE 10 2004 060 788 A1 wurde eine Lagerung für einen Kraftfahrzeugkühler bekannt, der zwei untere und zwei obere, seitliche Lager aufweist. Die unteren Lager sind als kühlerseitige Zapfen und fahrzeugseitige Gummibuchsen ausgebildet und nehmen Kräfte in und quer zur Fahrtrichtung, d. h. in x- und y-Richtung auf. Die oberen Lager dagegen nehmen vornehmlich Kräfte in z-Richtung, also in Richtung der Vertikalen auf. Die Aufnahme von Kräften in x-Richtung ist nachgiebig gestaltet, um ein günstiges Crashverhalten zu erzielen.

Durch die DE 10 2005 002 058 A1 der Anmelderin wurde eine Lagerung für einen Wärmeübertrager oder ein Kühlmodul bekannt, wobei zur Abstützung im Fahrzeug zwei seitliche, untere Hauptlager und zwei obere Nebenlager am Kühler oder Kühlmodul vorgesehen sind. Das Hauptlager ist als elastisches Lager mit einem Gummielement ausgebildet, welches in einen Uförmig profilierten Kunststoffhalter eingesetzt wird und einen Lagerzapfen des Wärmeübertragers in sich aufnimmt. Das Gummielement wird in Richtung der Zapfenlängsachse (y-Richtung) in den Kunststoffhalter eingeschoben bzw. eingeknüpft. Das Gummielement überträgt vom Wärmeübertrager ausgehende Kräfte in x- und z-Richtung auf den Kunststoffhalter und damit auf den Fahrzeugrahmen. Das Gummielement bzw. der Kunststoff- oder Modulhalter ist nicht in der Lage, Kräfte in y-Richtung aufzunehmen - hierfür sind zusätzliche Lager, z. B. die oben erwähnten Nebenlager vorgesehen. Eine Schwingungsentkopplung findet also durch das Hauptlager nur in xund z-Richtung, nicht dagegen in y-Richtung statt.

Es ist Aufgabe der vorliegenden Erfindung, ein Lagerelement der eingangs genannten Art zu schaffen, welches auch in der Lage ist, Kräfte in yRichtung, d. h. quer zur Fahrtrichtung des Kraftfahrzeuges elastisch zu übertragen und damit eine Schwingungsentkopplung in y-Richtung zu erreichen.

Die Aufgabe der Erfindung wird durch die Merkmale des Patentanspruches 1 gelöst. Vorteilhafte Ausgestaltungen ergeben sich aus den Unteransprüchen.

Erfingdüngsgemäß ist vorgesehen, dass das elastische Stützelement derart formschlüssig mit dem Rahmenelement verbunden ist, dass eine elastische Übertragung von Kräften in y-Richtung möglich ist. Damit wird eine Schwingungsentkopplung in drei Achsen, x-, y- und z-Richtung in einem Lager erreicht. Aufgrund dieser verbesserten schwingungsentkoppelten Abstützung wird die Schwingungsbelastung für den Wärmeübertrager oder das Kühlmodul geringer, sodaß sich die Lebensdauer verlängert. Vorteilhaft ist das Stützelement lösbar mit dem Rahmenelement verbunden. Dadurch ist eine einfache Montage und Demontage, z. B. für einen Austausch möglich. Vorteilhaft ist das Rahmenelement geteilt, d. h. es weist vorzugsweise einen oberen, etwa U-förmig ausgebildeten Lagerrahmen und ein unteres Rahmenschloss auf. Das Stützelement kann somit schubladenartig in den U-förmigen Lagerrahmen eingeschoben und durch das Rahmenschloss eingeschlossen werden. Die Verriegelung beider Rahmenteile erfolgt vorzugsweise durch eine Stützhülse.

Nach der Erfindung umfasst das Stützelement ein elastisches Element, welches aus einem elastomeren Werkstoff, insbesondere Gummi hergestellt ist. Ferner umfasst das Stützelement einen inneren Ring in Form einer Lagerbuchse zur Aufnahme des wärmeübertragerseitigen oder modulseitigen Lagerzapfens. Schließlich umfasst das Stützelement einen äußeren als Ummantelung ausgebildeten Ring in Form einer Bandage, welche das elastische Element umschließt. Die Lagerbuchse und die Ummantelung, welche jeweils aus einem härten Kunststoff bestehen, sind an das elastische Element, insbesondere das Gummielement angespritzt, d. h. sie sind als so genanntes Zwei-Komponenten-Teil hergestellt.

Nach einer weiteren bevorzugten Ausführungsform ist das Stützelement, welches auch als Entkoppelungselement bezeichnet werden kann, als eigene Baugruppe ausgebildet, welche als Funktionsbaugruppe auch in andere Lager für Wärmeübertrager oder Kühlmodule übernommen werden kann. Darüber hinaus ist das Stützelement in Bezug auf die quer zur y-Richtung verlaufende Mittelebene symmetrisch ausgebildet, d. h. das Stützelement kann sowohl für das rechte als auch für das linke Lager verwendet werden. Dies reduziert die Teilevieifalt und Vereinfacht die Montage.

Nach einer weiteren bevorzugten Ausführungsform bildet die Lagerbuchse des Stützelementes einen axialen Anschlag, an welchem sich der Lagerzapfen, der einen ähnlichen Anschlag aufweist, in axialer Richtung, d. h. in der Längsachse des Zapfens abstützt. Damit werden die vom Wärmeübertrager bzw. vom Kühlmodul ausgehenden Kräfte in y-Richtung auf das Stützelement und von diesem formschlüssig auf das Rahmenelement übertragen-letzteres ist fahrzeugseitig befestigt.

Nach einer weiteren vorteilhaften Ausgestaltung ist das Lagerelement unverlierbar mit dem Wärmeübertrager oder Kühlmodul verbunden. Damit kann das Kühlmodul gleichzeitig mit seinen Lagerelementen in das Fahrzeug eingesetzt und an dessen Rahmen befestigt werden. Dies vereinfacht die Montage und vermeidet Fehlerquellen.

Bevorzugt kann eine Sicherung gegen Verlieren durch eine Schnappverbindung zwischen Zapfen und Stützelement oder durch einen Presssitz zwischen dem Lagerzapfen und der Lagerbuchse des Stützelements erfolgen.

Ein Ausführungsbeispiel der Erfindung ist in der Zeichnung dargestellt und wird im Folgenden näher beschrieben.

Es zeigen
- Fig. 1: ein erfindungsgemäßes Lagerelement mit Lagerzapfen eines Kühlmoduls,
- Fig. 1a - 1d: Einzelteile des Lagerelements gemäß Fig. 1 und
- Fig. 2: eine schematische Darstellung eines Kühlmoduls mit Lagerzapfen.

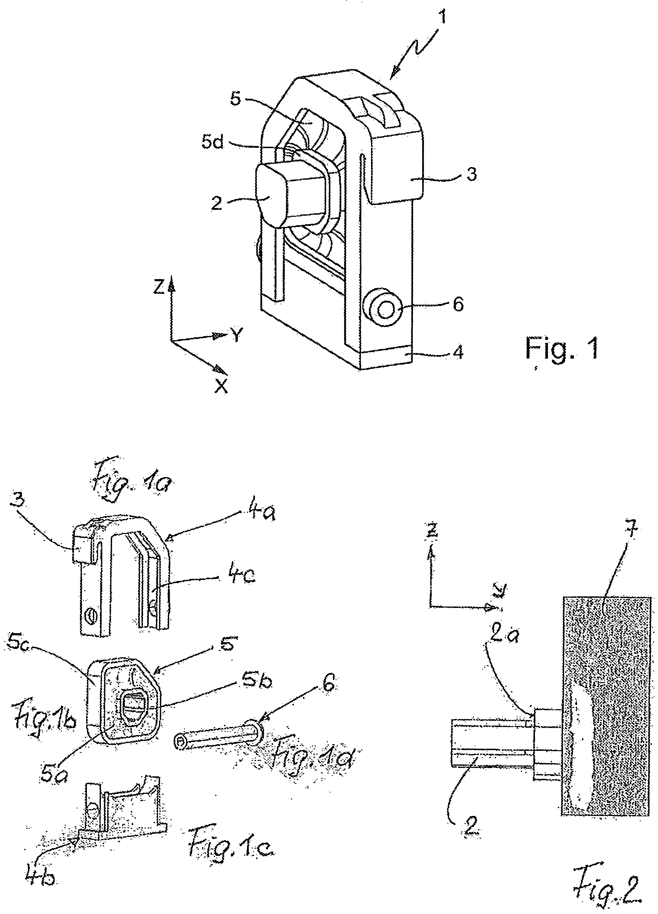

Fig. 1 zeigt ein Lagerelement 1 zur Aufnahme eines Lagerzapfens 2 eines hier nicht dargestellten Kühlmoduls, welches eine Gruppe von Wärmeübertragern eines Kraftfahrzeuges, z. B. einen Kühlmittelkühler, einen Ladeluftkühler, einen Kühlmittelkondensator und/oder einen Ölkühler sowie eine Luftfördereinrichtung (kühlgebläse) umfassen kann. Die Anordnung des Lagerelementes 1 im Fahrzeug ist durch die Achsen x, y, z veranschaulicht, wobei die Achse x der Fahrtrichtung entspricht. Das Lagerelement 1 weist eine hakenförmige Einhängevorrichtung 3 auf, über welche das Kühlmodul an einem nicht dargestellten Teil der Fahrzeugkarosserie eingehängt und anschließen befestigt werden kann. Der Aufbau des Lagerelements 1 wird auch anhand der Figuren 1a bis 1d erläutert, welche die Einzelteile des Lagerelements 1 zeigen. Das Lagerelement 1 umfasst ein geteiltes Rahmenelement 4, welches gemäß Fig. 1a einen Lagerrahmen 4a und gemäß Fig. 1c ein Rahmenschloss 4b aufweisf. Das Lagerelement1 1 umfasst ferner ein in Fig. 1b dargestelltes elastisches Stützelement 5 und gemäß Fig. 1d eine Stützhülse 6. Das elastische Stützelement 5 umfasst ein aus einem etastomeren Werkstoff, insbesondere Gummi bestehendes Federelement 5a, auch elastisches Element 5a genannt, einen als Lagerbuchse 5b ausgebildeten inneren Ring und einen als Ummantelung 5c ausgebildeten äußeren Ring. Die Stützhülse 5 ist als so genanntes Zwei-Komponenten-Tei ausgebildet, d. h. die Lagerbuchse 5b und die Ummantelung 5c, welche jeweils aus einem festen Kunststoffmaterial bestehen, sind durch Anspritzen mit der Gummimasse des Federelements 5a innig verbunden. Das Gummifederelement 5a kann - was nicht dargestellt ist - über den Umfang verteilte Durchbrechungen aufweisen, um die gewünschte Elastizität und Schwingungsentkoppelung zu erzielen. Neben dem Werkstoff Gummi (Naturkautschuk) können auch synthetische Kautschuksorten für das Federelement 5a verwendet werden. Der Lagerrahmen 4a weist auf seiner Innenseite eine als Nut 4c ausgebildete Führung auf, welche der Positionierung und Fixierung des Stützelementes 5 im Lagerrahmen 4a und damit im Lagerelement 1 dient. Die Nut 4c weist eine Breite auf, welche der Breite der Ummanfelung 5c des Stützelementes 5 entspricht, welches schubladenartig in den Lagerrahmen 4a eingeschoben wird. Anschließend wird der Lagerrahmen 4a durch das Rahmenschloss 4b geschlossen und zum Rahmenelement 4 komplettiert, welches durch die Stützhülse 6 formschlüssig verriegelt wird. Durch die Stützhülse 6 kann ein nicht dargestellter Schraubbolzen zur Befestigung des Lagerelements am Fahrzeugrahmen gesteckt werden.

Das Stützelement 5 weist einen axialen Anschlag 5d (vgl. Fig. 1) auf, welcher als Bund der Lagerbuchse 5b ausgebildet ist. Das Stützelement 5 ist in Bezug auf seine Mittelebene symmetrisch ausgebildet, sodass ein axialer Anschlag auf beiden Seiten ausgebildet ist. Darüber hinaus ist der Querschnittsverlauf des Gummifederelementes 5a in Bezug auf die Mittelebene symmetrisch ausgebildet, sodass das Lagerelement 1 für beide Seiten des Kühlmoduls, d. h. die rechte und die linke Seite verwendet werden kann.

Fig. 2 zeigt - in schematischer Darstellung - ein Kühlmodul 7, an welchem der Lagerzapfen 2 (vgl. Fig. 1) befestigt ist. Der Lagerzapfen 2 weist einen axialen Anschlag in Form eines Bundes 2a auf, über welchen Axialkräfte, d. h. Kräfte in y-Richtung übertragbar sind. Der axiale Anschlag 2a liegt nach Montage des Lagerelementes 1 am axialen Anschlag 5d des Stützelementes 5 an. Vorzugsweise sind an dem Kühlmodul 7 zwei Lagerzapfen 2 auf der rechten und der linken Seite koaxial angeordnet, welche in zwei Lagerelemengen 1 aufgenommen werden. Das gesamte Kühlmodul 7 wird durch ein drittes, nicht dargestelltes Lager - insbesondere gegen Kippen - abgestützt, welches sich an der Schlossbrücke des Fahrzeuges befinden kann.

Das Stützelement 5, insbesondere sein Gummifederelement 5a ist von der Materialauswahl und der Querschnittsverteilung derart ausgebildet, dass es Kräfte in Richtung der drei Achsen x, y, z, aufnehmen kann. Die Hauptbelastung des Stützelementes 5 ergibt sich aus den in z-Richtung wirkenden Gewichtskräften des Kühlmoduls 7 sowie aus Beschleunigungskräften der Masse des Kühlmoduls 7. Zusätzlich werden jedoch auch Querkräfte, d. h. in yRichtung durch das Federelement 5a aufgenommen. Insgesamt ist das Federelement 5a derart ausgebildet und ausgelegt, dass es als Schwingungsisolator in allen drei Achsen wirkt, d. h. als dreiachsiges Entkoppelungselement.

Nach einer nicht dargestellten Ausführungsform der Erfindung ist das Lagerelement 1 unverlierbar mit dem Lagerzapfen 2 bzw. dem Kühlmodul 7 verbunden. Diese Verliersicherung kann durch einen Presssitz zwischen Lagerzapfen 2 und Lagerbuchse 5b oder durch eine Rastverbindung zwischen Lagerzapfen 2 und Stützelement 5 dargestellt werden. Damit kann das Kühlmodul 7 einschließlich der beiden Lagerelement 1 in das Fahrzeug eingesetzt und befestigt werden-wie oben beschrieben.

## Patentansprüche

1. Lagerelement (1) zur elastischen Abstützung mindestens eines Wärmeübertragers (7) in einem Kraftfahrzeug, umfassend ein Rahmenelement (4) und ein elastisches Stützelement (5) mit einer Öffnung zur Aufnahme eines wärmeübertragerseitig angeordneten Lagerzapfens (2), wobei das elastische Stützelement (5) in Längsrichtung des Lagerzapfens (2), d. h. in y-Richtung formschlüssig mit dem Rahmenelement (4) verbunden ist, wobei das Stützelement (5) ein elastisches Element (5a) umfasst, welches aus einem elastomeren Werkstoff, insbesondere Gummi hergestellt ist, wobei das Stützelement (5) eine Lagerbuchse (5b) zur Aufnahme des Lagerzapfens (2) umfasst und das Stützelement (5) eine Ummantelung (5c) umfasst, welche formschlüssig in das Rahmenelement (4), insbesondere den Lagerrahmen (4a), einschiebbar ist, wobei das Stützelement (5), umfassend die Lagerbuchse (5b), die Ummantelung (5c) sowie das elastische Element (5a), als Zwei-Komponenten-Teil gespritzt ist, **dadurch gekennzeichnet, dass** die Lagerbuchse und die Ummantelung aus einem harten Kunststoff bestehen, an das elastische Element, angespritzt sind.

2. Lagerelement nach Anspruch 1, **dadurch gekennzeichnet, dass** das Stützelement (5) lösbar mit dem Rahmenelement (4) verbunden ist.

3. Lagerelement nach Anspruch 1 oder 2, **dadurch gekennzeichnet, dass** das Rahmenelement (4) im Bereich des Stützelementes (5) geteilt und dass Stützelement in das Rahmenelement (4) einschiebbar ist.

4. Lagerelement nach Anspruch 3, **dadurch gekennzeichnet, dass** das Rahmenelement (4) einen Lagerrahmen (4a) umfasst, welcher Führungselemente, insbesondere Nuten (4c) zum Einschieben des Stützelementes (5) aufweist.

5. Lagerelement nach einem der vorhergehenden Ansprüche, **dadurch gekennzeichnet, dass** die Lagerbuchse (5b) einen axialen Anschlag (5d) zur Abstützung des Lagerzapfens (2) aufweist.

6. Lagerelement nach einem der vorhergehenden Ansprüche, **dadurch gekennzeichnet, dass** das Stützelement (5) als Unterbaugruppe ausgebildet ist.

7. Lagerelement nach einem der vorhergehenden Ansprüche, **dadurch gekennzeichnet, dass** es unverlierbar mit dem Lagerzapfen (2) verbunden ist.

8. Lagerelement nach Anspruch 7, **dadurch gekennzeichnet, dass** das Lagerelement (1) durch einen Presssitz zwischen Lagerbuchse (5b) und Lagerzapfen (2) gehalten ist.

9. Lagerelement nach Anspruch 7, **dadurch gekennzeichnet, dass** zwischen Stützelement (5) und Lagerzapfen (2) eine Rastverbindung vorgesehen ist.

10. Wärmeübertrager oder Kühlmodul (7) für ein Kraftfahrzeug, **gekennzeichnet durch** mindestens ein Lagerelement (1) nach einem der vorhergehenden Ansprüche.

11. Wärmeübertrager oder Kühlmodul nach Anspruch 10, **dadurch gekennzeichnet, dass** zwei Lagerelemente (1) koaxial am Wärmeübertrager oder Kühlmodul (7) angeordnet sind.

## Claims

1. A bearing element (1) for elastic support of at least one heat exchanger (7) in a motor vehicle, comprising a frame element (4) and an elastic support element (5) with an opening for receiving a bearing journal (2) arranged at a side of a heat exchanger, wherein the elastic support element (5) is connected to the frame element (4) in longitudinal direction of the bearing journal (2), i.e. in y-direction, in a formfit manner, wherein the support element (5) comprises an elastic element (5a) which is made of an elastomeric material, in particular rubber, wherein the support element (5) comprises a bearing bush (5b) for receiving the bearing journal (2) and the support element (5) comprises a casing (5c) which is insertable into the frame element (4), in particular the bearing frame (4a), in a form-fit manner, wherein the support element (5), comprising the bearing bush (5b), the casing (5c) and the elastic element (5a), is injection-moulded as a two-component part, **characterised in that** the bearing bush and the casing are made of rigid plastic, injection-moulded onto the elastic element.

2. The bearing element as claimed in claim 1, **characterised in that** the support element (5) is detachably connected to the frame element (4).

3. The bearing element as claimed in claim 1 or 2, **characterised in that** the frame element (4) is divided in the area of the support element (5) and **in that** the support element is slidably insertable into the frame element (4).

4. The bearing element as claimed in claim 3, **characterised in that** the frame element (4) comprises a bearing frame (4a) having guide elements, in particular grooves (4c), for slidably inserting the support element (5).

5. The bearing element as claimed in any one of the preceding claims, **characterised in that** the bearing bush (5b) has an axial stop (5d) for supporting the bearing journal (2).

6. The bearing element as claimed in any one of the preceding claims, **characterised in that** the support element (5) is formed as a subassembly.

7. The bearing element as claimed in any one of the preceding claims, **characterised in that** it is captively connected to the bearing journal (2).

8. The bearing element as claimed in claim 7, **characterised in that** the frame element (1) is held by a press fit between the bearing bush (5b) and bearing journal (2).

9. The bearing element as claimed in claim 7, **characterised in that** a latching connection is provided between the support element (5) and the bearing journal (2).

10. A heat exchanger or cooling module (7) for a motor vehicle, **characterised by** at least one bearing element (1) as claimed in any one of the preceding claims.

11. The heat exchanger or cooling module as claimed in claim 10, **characterised in that** two bearing elements (1) are coaxially arranged on said heat exchanger or cooling module (7).

## Revendications

1. Elément support (1) servant d'appui élastique d'au moins un échangeur de chaleur (7) dans un véhicule automobile, comprenant un élément formant cadre (4) et un élément d'appui élastique (5) comportant une ouverture pour le logement d'un tourillon support (2) disposé côté échangeur de chaleur, où l'élément d'appui élastique (5) est assemblé avec l'élément formant cadre (4), par complémentarité de forme, dans la direction longitudinale du tourillon d'appui (2), c'est-à-dire suivant la direction y, où l'élément d'appui (5) comprend un élément élastique (5a) qui est fabriqué dans un matériau élastomère, en particulier du caoutchouc, où l'élément d'appui (5) comprend un coussinet (5b) servant au logement du tourillon support (2), et l'élément d'appui (5) comprend une enveloppe (5c) qui peut être insérée, par complémentarité de forme, dans l'élément formant cadre (4), en particulier le cadre support (4a), où l'élément d'appui (5), qui comprend le coussinet (5b), l'enveloppe (5c) ainsi que l'élément élastique (5a), est moulé par injection comme une pièce à deux composants, **caractérisé en ce que** le coussinet et l'enveloppe, qui se composent d'une matière plastique dure, sont moulés par injection sur l'élément élastique.

2. Elément support selon la revendication 1, **caractérisé en ce que** l'élément d'appui (5) est assemblé, de façon détachable, avec l'élément formant cadre (4).

3. Elément support selon la revendication 1 ou 2, **caractérisé en ce que** l'élément formant cadre (4) est divisé dans la zone de l'élément d'appui (5), et **en ce que** l'élément d'appui peut être inséré dans l'élément formant cadre (4).

4. Elément support selon la revendication 3, **caractérisé en ce que** l'élément cadre (4) comprend un cadre support (4a) qui présente des éléments de guidage, en particulier des rainures (4c), servant à l'insertion de l'élément d'appui (5).

5. Elément support selon l'une quelconque des revendications précédentes, **caractérisé en ce que** le coussinet (5b) présente une butée axiale (5d) servant à l'appui du tourillon support (2).

6. Elément support selon l'une quelconque des revendications précédentes, **caractérisé en ce que** l'élément d'appui (5) est configuré comme un sous-ensemble.

7. Elément support selon l'une quelconque des revendications précédentes, **caractérisé en ce qu'**il est assemblé, de façon imperdable, avec le tourillon support (2).

8. Elément support selon la revendication 7, **caractérisé en ce que** l'élément support (1) est tenu par un ajustement sans jeu entre le coussinet (5b) et le tourillon support (2).

9. Elément support selon la revendication 7, **caractérisé en ce qu'**il est prévu un assemblage par encliquetage entre l'élément d'appui (5) et le tourillon support (2).

10. Echangeur de chaleur ou module de refroidissement (7) pour un véhicule automobile, **caractérisé par** au moins un élément support (1) selon l'une quelconque des revendications précédentes.

11. Echangeur de chaleur ou module de refroidissement selon la revendication 10, **caractérisé en ce que** deux éléments supports (1) sont disposés sur l'échangeur de chaleur ou sur le module de refroidissement (7), de façon coaxiale.
